(19) **Europäisches Patentamt**

**European Patent Office**

**Office européen des brevets**

(11) **EP 0 838 519 B1**

(12) **EUROPEAN PATENT SPECIFICATION**

(45) Date of publication and mention
of the grant of the patent:
**08.03.2000 Bulletin 2000/10**

(51) Int Cl.[7]: **C11D 17/00**, C11D 3/20,
C11D 3/12, C11D 3/37,
C11D 3/10, C02F 5/08

(21) Application number: **97308427.0**

(22) Date of filing: **22.10.1997**

(54) **Water-softening and detergent compositions**

Wasserenthärtende Zusammensetzungen und Waschmittelzusammensetzungen

Compositions pour adoucir l'eau et compositions détergentes

(84) Designated Contracting States:
**DE ES FR GB IE IT NL**

(30) Priority: **22.10.1996 GB 9621979**

(43) Date of publication of application:
**29.04.1998 Bulletin 1998/18**

(60) Divisional application: **99202991.8 / 0 972 824**

(73) Proprietors:
• **UNILEVER PLC**
  **London EC4P 4BQ (GB)**
  Designated Contracting States:
  **GB IE**
• **UNILEVER N.V.**
  **3013 AL Rotterdam (NL)**
  Designated Contracting States:
  **DE ES FR IT NL**

(72) Inventor: **Gordon, James William**
**Unilever R. Vlaardingen Lab.**
**3133 AT Vlaardingen (NL)**

(74) Representative: **Elliott, Peter William et al**
**Unilever plc**
**Patent Division**
**Colworth House**
**Sharnbrook**
**Bedford MK44 1LQ (GB)**

(56) References cited:
EP-A- 0 002 293         EP-A- 0 711 827
WO-A-90/02165          WO-A-96/06156
US-A- 3 957 661        US-A- 4 642 197

Remarks:
The file contains technical information submitted after the application was filed and not included in this specification

## Description

This invention relates to compositions in the form of tablets, containing a water-softening agent. These tablets may be embodied as detergent compositions for use in fabric washing, or as water-softening tablets, which could be used in fabric washing jointly with a composition containing detergent active, or could possibly be used in other applications, e.g. in machine dishwashing as an anti-limescale product.

Detergent compositions in tablet form are described, for example, in GB 911204 (Unilever), US 3953350 (Kao), JP 60-015500A (Lion), JP 60-135497A (Lion) and JP 60-135498A (Lion); and are sold commercially in Spain. Tablets have several advantages over powdered products: they do not require measuring and are thus easier to handle and dispense into the washload, and they are more compact, hence facilitating more economical storage.

Detergent tablets are generally made by compressing or compacting a detergent powder, which includes detergent active and detergency builder. EP-A-522766 explains that difficulty has been found in providing tablets which have adequate strength when dry, yet disperse and dissolve quickly when added to wash water. The problem has proved especially difficult with compositions containing insoluble aluminosilicate as detergency builder.

This prior document teaches that at least some particles of the composition should be coated with a binder which helps to hold the tablet together and allows a tablet to be made using a lower compaction pressure. The binder can also function as a disintegrant.

US 4,642,197 teaches that the effect of selected tablet disintegration agents in a washing additive tablet may be enhanced by the addition of note more than 7% by weight of an alkali metal salt of short-chain organic mono- or polycarboxylic acid. Sodium acetate and sodium citrate are named.

EP-A-482627 teaches that a detergent composition for compaction into tablets with improved solubility should include potassium carbonate together with nonionic surfactant.

EP-A-711827 teaches that speed of disintegration of tablets can be improved by including a highly water-soluble citrate. Tablet compositions exemplified in that document include sodium citrate dihydrate and also polyethylene glycol as an organic polymeric binder. This document also mentions that sodium acetate can be included in a composition as a lubricant to aid tabletting. The trihydrate of sodium acetate is not named. The amount of lubricant is not stated, but it would be appropriate to include only a small amount.

WO 90/02165 mentions a range of materials including sodium acetate trihydrate as tableting aids, preferably used as a small percentage of the composition and preferably of fine particle size. A range of possible functions is attributed indiscriminately to these tableting aids.

WO 96/06156 mentions that hydrated materials are useful when making tablets with the aid of microwave radiation to cause sintering.

Surprisingly, we have now found that the speed of disintegration of tablets can be enhanced by including sodium acetate trihydrate. This material has been found to be more effective than some other materials, including sodium citrate dihydrate, even without polymeric binder present. Moreover, we have found that sodium acetate trihydrate can be included without detriment to tablet strength. Indeed we have observed enhancements in tablet strength. Potassium acetate has also been found to be remarkably effective.

Broadly, the present invention provides a tablet of a compacted particulate composition wherein the tablet or a region thereof contains a water-softening agent and the composition also includes sodium acetate trihydrate, potassium acetate or a mixture of them.

The amount of water-softening agent will be at least 15% by weight of the composition. Depending on the function for which the tablets are intended the amount may range up to 90 % by weight. In significant forms of this invention there is at least 15%, by weight of the composition, of a water-insoluble water softening agent.

The amount of the sodium acetate trihydrate or potassium acetate or mixture of the two is 10% by weight of the composition, often at least 13% by weight. The amount will not exceed 35% by weight of the composition and frequently will not exceed 25% or 30% by weight of the composition.

It is possible that the sodium acetate trihydrate or potassium acetate might be used jointly with sodium citrate dihydrate because sodium citrate dihydrate may function as a water-soluble water softening agent/detergency builder as well as enhancing the speed of disintegration of a tablet in water. Thus a tablet composition might contain from 10% up to 20% or more of sodium acetate trihydrate or potassium acetate or a mixture of the two, accompanied by 5% to 20% by weight of sodium citrate dihydrate.

Accordingly, the present invention provides a tablet of a compacted particulate composition wherein the tablet or a region thereof comprises at least 15 % by weight of a water-softening agent, and wherein the tablet or said region thereof contains 10 to 35% by weight of sodium acetate trihydrate, potassium acetate or mixture of the two, optionally accompanied by sodium citrate dihydrate, provided that the total quantity of sodium acetate trihydrate, potassium acetate and sodium citrate dihydrate does not exceed 50% by weight of the tablet or said region thereof.

In another aspect, this invention provides the use of sodium acetate trihydrate, potassium acetate or mixture of the two, in such a tablet of compacted particulate composition or a region thereof, to enhance the disintegration of the tablet in water.

This invention utilises sodium acetate trihydrate, potassium acetate, or a mixture of them both, to promote disintegration of a tablet in water.

Although potassium acetate is very effective, it is hygroscopic. We have found it easier to use sodium acetate trihydrate.

It is strongly preferred that the sodium acetate trihydrate and/or mixture thereof with sodium citrate dihydrate (if any) have a mean particle size of above 250μm, preferably above 300μm (0.3mm), better above 500μm (0.5mm) to facilitate flow and handling of the particulate composition prior to and during compaction. The particle size will probably have a mean value less than 2mm, preferably less than 1mm. Poor powder flow is disadvantageous, <u>inter alia,</u> in that it leads to irregular filling of dies and inconsistent tablet weight and strength.

<u>Water-softening agent</u>

It is particularly envisaged that this invention will be applied to tablets containing water-insoluble water softening agent, notably alkali-metal aluminosilicate. However, it could be applied in tablets containing a soluble water-softening agent such as a condensed phosphate. It could be applied in tablets containing both soluble and insoluble water softening agents - as might be used in countries where a restricted quantity of phosphate detergency builder is permitted.

It is very well known that water-insoluble alkali metal aluminosilicates can function to soften water, removing calcium ions and to a lesser extent magnesium ions by ion exchange. Aluminosilicates have become strongly favoured as environmentally acceptable detergency builders.

Alkali metal (preferably sodium) aluminosilicates used in tablets of the present invention may be either crystalline, amorphous or a mixture of the two. Such aluminosilicates generally have a calcium ion exchange capacity of at least 50 mg CaO per gram of aluminosilicate, comply with a general formula:

$$0.8\text{-}1.5 \; Na_2O \; . \; Al_2O_3 \; . \; 0.8\text{-}6 \; SiO_2$$

and incorporate some water. Preferred sodium aluminosilicates within the above formula contain 1.5-3.5 $SiO_2$ units. Both amorphous and crystalline aluminosilicates can be prepared by reaction between sodium silicate and sodium aluminate, as amply described in the literature.

Suitable crystalline sodium aluminosilicate ion-exchange detergency builders are described, for example, in GB 1429143 (Procter & Gamble). The preferred sodium aluminosilicates of this type are the well known commercially available zeolites A and X, and mixtures thereof. Also of interest is the novel zeolite P described and claimed in EP 384070 (Unilever).

Another category of water-insoluble material which can function as a water-softening agent and detergency builder is the layered sodium silicate builders disclosed in US-A-4464839 and US-A-4820439 and also referred to in EP-A-551375.

These materials are defined in US-A-4820439 as being crystalline layered sodium silicate of the general formula

$$NaMSi_xO_{2x+1} \; . \; YH_2O$$

where

M   denotes sodium or hydrogen,
x    is from 1.9 to 4 and y is from 0 to 20.

Quoted literature references describing the preparation of such materials include Glastechn. Ber. 37, 194-200 (1964), Zeitschrift für Kristallogr. 129, 396-404 (1969), Bull. Soc. Franc. Min. Crist., 95, 371-382 (1972) and Amer. Mineral, 62, 763-771 (1977). These materials also function to remove calcium and magnesium ions from water.

It is customary to use a water-soluble builder (water-softening agent) jointly with aluminosilicate, to enhance water-softening efficacy. Such water-soluble co-builders are generally used in an amount which is not greater than the amount of aluminosilicate, often less than half the amount of aluminosilicate. Water-soluble builders may be organic or inorganic. Inorganic builders that may be present include alkali metal (generally sodium) carbonate; while organic builders include polycarboxylate polymers, such as polyacrylates, acrylic/maleic copolymers, and acrylic phosphonates, monomeric polycarboxylates such as citrates, gluconates, oxydisuccinates, glycerol mono- di- and trisuccinates, carboxymethyloxysuccinates, carboxymethyloxymalonates, dipicolinates and hydroxyethyliminodiacetates.

Especially preferred supplementary builders are polycarboxylate polymers, more especially polyacrylates and acrylic/maleic copolymers, and monomeric polycarboxylates, more especially citric acid and its salts.

If a tablet contains only soluble water-softening agent, this may well be sodium tripolyphosphate, which is widely used as a detergency builder in some countries.

When using aluminosilicate or other insoluble detergency builder/water-softening agent it is often a commercial or legislative requirement to avoid phosphates. Some tablet compositions of the invention do not contain more than 5 wt% of inorganic phosphate builders, and are desirably substantially free of phosphate builders. However, tableted compositions containing some phosphate builder are also within the broad scope of the invention. In particular, a tablet or region thereof may contain at least 15 wt% insoluble water softening agent, with phosphate or other water-soluble builder in addition.

Polymer binder

Tablets of this invention may include an organic water-soluble polymer, applied as a coating to some of the constituent particles, and serving as a binder when the particles are compacted into tablets. This polymer may be a polycarboxylate included as a supplementary builder, as mentioned earlier.

It is preferred that such a binder material, if present, should melt at a temperature of at least 35°C, better 40°C or above, which is above ambient temperatures in many temperate countries. For use in hotter countries it will be preferable that the melting temperature is somewhat above 40°C, so as to be above the ambient temperature.

For convenience the melting temperature of the binder material should be below 80°C.

Preferred binder materials are synthetic organic polymers of appropriate melting temperature, especially polyethylene glycol. Polyethylene glycol of average molecular weight 1500 (PEG 1500) melts at 45°C and has proved suitable. Polyethylene glycol of higher molecular weight, notably 4000 or 6000, can also be used.

Other possibilities are polyvinylpyrrolidone, and polyacrylates and water-soluble acrylate copolymers.

The binder may suitably be applied to the particles by spraying, e.g. as a solution or dispersion. If used, the binder is preferably used in an amount within the range from 0.1 to 10% by weight of the tablet composition, more preferably the amount is at least 1% or even at least 3% by weight of the tablets. Preferably the amount is not over 8% or even 6% by weight unless the binder serves some other additional function.

Tablets may include other ingredients which aid tableting. Tablet lubricants include calcium, magnesium and zinc soaps (especially stearates), talc, glyceryl behapate, sugar Myvatex (Trade Mark) TL ex Eastman Kodak, polyethylene glycols, and colloidal silicas (for example, Alusil (Trade Mark) ex Crosfield Chemicals Ltd).

As mentioned above, compositions of this invention may be embodied as detergent compositions for use in fabric washing, in which case the composition will generally contain from 15 to 60% by weight of detergency builder, notably water-insoluble aluminosilicate, together with 5 to 50% by weight of one or more detergent-active compounds. Such a composition may well contain from 0.5 to 15% by weight of a supplementary builder, notably polycarboxylate, and also other detergency ingredients.

Another possibility is that the invention may be embodied in tablets whose principal or sole function is that of removing water hardness. In such tablets the water-softening agents, especially water-insoluble aluminosilicate, may provide from 50 to 98% of the tablet composition. A water-soluble supplementary builder may well be included, for instance in an amount from 2% to 30wt% of the composition.

Water-softening tablets embodying this invention may include some detergent active. Notably, water-softening tablets may include nonionic surfactant which can act as a lubricant during tablet manufacture and as a low foaming detergent during use. The amount may be small, e.g. from 0.2 or 0.5% by weight of the composition up to 3% or 5% by weight.

Detergent Tablets

Tablets for use in fabric washing will generally contain from 5% to 50% by weight of detergent active, preferably from 5% or 9wt% up to 40% or 50wt%. Detergent-active material present may be anionic (soap or non-soap), cationic, zwitterionic, amphoteric, nonionic or any combination of these.

Anionic detergent-active compounds may be present in an amount of from 0.5 to 40 wt%, preferably from 2% or 4% to 30% or 40wt%.

Synthetic (i.e. non-soap) anionic surfactants are well known to those skilled in the art. Examples include alkylbenzene sulphonates, particularly sodium linear alkylbenzene sulphonates having an alkyl chain length of $C_8$-$C_{15}$; olefin sulphonates; alkane sulphonates; dialkyl sulphosuccinates; and fatty acid ester sulphonates.

Primary alkyl sulphate having the formula

$$ROSO_3^- \ M^+$$

in which R is an alkyl or alkenyl chain of 8 to 18 carbon atoms especially 10 to 14 carbon atoms and $M^+$ is a solubilising cation, is commercially significant as an anionic detergent active. It is frequently the desired anionic detergent and may provide 75 to 100% of any anionic non-soap detergent in the composition.

In some forms of this invention the amount of non-soap anionic detergent lies in a range from 0.5 to 15 wt% of the tablet composition.

It may also be desirable to include one or more soaps of fatty acids. These are preferably sodium soaps derived from naturally occurring fatty acids, for example, the fatty acids from coconut oil, beef tallow, sunflower or hardened rapeseed oil.

Suitable nonionic detergent compounds which may be used include in particular the reaction products of compounds having a hydrophobic group and a reactive hydrogen atom, for example, aliphatic alcohols, acids, amides or alkyl phenols with alkylene oxides, especially ethylene oxide either alone or with propylene oxide.

Specific nonionic detergent compounds are alkyl ($C_{8-22}$) phenol-ethylene oxide condensates, the condensation products of linear or branched aliphatic $C_{8-20}$ primary or secondary alcohols with ethylene oxide, and products made by condensation of ethylene oxide with the reaction products of propylene oxide and ethylene-diamine. Other nonionic detergent compounds include alkylpolyglycosides, long-chain amine oxides, tertiary phosphine oxides, and dialkyl sulphoxides.

Especially preferred are the primary and secondary alcohol ethoxylates, especially the $C_{9-11}$ and $C_{12-15}$ primary and secondary alcohols ethoxylated with an average of from 5 to 20 moles of ethylene oxide per mole of alcohol.

In certain forms of this invention the amount of nonionic detergent lies in a range from 4 to 40%, better 4 or 5 to 30% by weight of the composition.

Many nonionic detergent-active compounds are liquids. These may be absorbed on a porous carrier. Preferred carriers include zeolite; zeolite granuled with other materials, for example Wessalith CS (Trade Mark), Wessalith CD (Trade Mark) or Vegabond GB (Trade Mark); sodium perborate monohydrate; Burkeite (spray-dried sodium carbonate and sodium sulphate as disclosed in EP-A-221776 of Unilever); and layered sodium silicate as described in US-A-4664839.

Bleach System

Tableted detergent compositions according to the invention may contain a bleach system. This preferably comprises one or more peroxy bleach compounds, for example, inorganic persalts or organic peroxyacids, which may be employed in conjunction with activators to improve bleaching action at low wash temperatures. If any peroxygen compound is present, the amount is likely to lie in a range from 10 to 25% by weight of the composition.

Preferred inorganic persalts are sodium perborate monohydrate and tetrahydrate, and sodium percarbonate, advantageously employed together with an activator. Bleach activators, also referred to as bleach precursors, have been widely disclosed in the art. Preferred examples include peracetic acid precursors, for example, tetraacetylethylene diamine (TAED), now in widespread commercial use in conjunction with sodium perborate; and perbenzoic acid precursors. The quaternary ammonium and phosphonium bleach activators disclosed in US 4751015 and US 4818426 (Lever Brothers Company) are also of interest. Another type of bleach activator which may be used, but which is not a bleach precursor, is a transition metal catalyst as disclosed in EP-A-458397, EP-A-458398 and EP-A-549272. A bleach system may also include a bleach stabiliser (heavy metal sequestrant) such as ethylenediamine tetramethylene phosphonate and diethylenetriamine pentamethylene phosphonate.

As indicated above, if a bleach is present and is a water-soluble inorganic peroxygen bleach, the amount may well be from 10% to 25% by weight of the composition.

Other Ingredients

The detergent tablets of the invention may also contain one of the detergency enzymes well known in the art for their ability to degrade and aid in the removal of various soils and stains. Suitable enzymes include the various proteases, cellulases, lipases, amylases, and mixtures thereof, which are designed to remove a variety of soils and stains from fabrics. Examples of suitable proteases are Maxatase (Trade Mark), as supplied by Gist-Brocades N.V., Delft, Holland, and Alcalase (Trade Mark), and Savinase (Trade Mark), as supplied by Novo Industri A/S, Copenhagen, Denmark. Detergency enzymes are commonly employed in the form of granules or marumes, optionally with a protective coating, in amount of from about 0.1% to about 3.0% by weight of the composition; and these granules or marumes present no problems with respect to compaction to form a tablet.

The detergent tablets of the invention may also contain a fluorescer (optical brightener), for example, Tinopal (Trade Mark) DMS or Tinopal CBS available from Ciba-Geigy AG, Basel, Switzerland. Tinopal DMS is disodium 4,4'bis-(2-morpholino-4-anilino-s-triazin-6-ylamino) stilbene disulphonate; and Tinopal CBS is disodium 2,2'-bis-(phenyl-styryl) disulphonate.

An antifoam material is advantageously included, especially if the detergent tablet is primarily intended for use in front-loading drum-type automatic washing machines. Suitable antifoam materials are usually in granular form, such as those described in EP 266863A (Unilever). Such antifoam granules typically comprise a mixture of silicone oil, petroleum jelly, hydrophobic silica and alkyl phosphate as antifoam active material, sorbed onto a porous absorbed water-soluble carbonate-based inorganic carrier material. Antifoam granules may be present in an amount up to 5% by weight of the composition.

It may also be desirable that a detergent tablet of the invention includes an amount of an alkali metal silicate, particularly sodium ortho-, meta- or preferably alkali metal silicates at levels, for example, of 0.1 to 10 wt%, may be advantageous in providing protection against the corrosion of metal parts in washing machines, besides providing some measure of building and giving processing benefits.

Further ingredients which can optionally be employed in the detergent tablet of the invention include antiredeposition agents such as sodium carboxymethylcellulose, straight-chain polyvinyl pyrrolidone and the cellulose ethers such as methyl cellulose and ethyl hydroxyethyl cellulose, fabric-softening agents; heavy metal sequestrants such as EDTA; perfumes; and colorants or coloured speckles.

Particle Size and Distribution

A detergent tablet of this invention, or a discrete region of such a tablet, is a matrix of compacted particles. Preferably the particulate composition has an average particle size in the range from 200 to 2000 $\mu$m, more preferably from 250 to 1400 $\mu$m. Fine particles, smaller than 180 $\mu$m or 200 $\mu$m may be eliminated by sieving before tableting, if desired, although we have observed that this is not always essential.

While the starting particulate composition may in principle have any bulk density, the present invention is especially relevant to tablets made by compacting powders of relatively high bulk density, because of their greater tendency to exhibit disintegration and dispersion problems. Such tablets have the advantage that, as compared with a tablet derived from a low bulk density powder, a given dose of composition can be presented as a smaller tablet.

Thus the starting particulate composition may suitably have a bulk density of at least 400 g/litre, preferably at least 500 g/litre, and advantageously at least 700 g/litre.

Granular detergent compositions of high bulk density prepared by granulation and densification in a high-speed mixer/granulator, as described and claimed in EP 340013A (Unilever), EP 352135A (Unilever), and EP 425277A (Unilever), or by the continuous granulation/densification processes described and claimed in EP 367339A (Unilever) and EP 390251A (Unilever), are inherently suitable for use in the present invention.

A tablet of the invention may be either homogeneous or heterogeneous. In the present specification, the term "homogeneous" is used to mean a tablet produced by compaction of a single particulate composition, but does not imply that all the particles of that composition will necessarily be of identical composition. Indeed it is likely that the composition will contain the sodium acetate trihydrate or potassium acetate as separate particles.

The term "heterogeneous" is used to mean a tablet consisting of a plurality of discrete regions, for example layers, inserts or coatings, each derived by compaction from a particulate composition and large enough to constitute from 10 to 90% of the weight of the whole table.

It is possible that the potassium acetate or sodium acetate trihydrate will be contained within one or more but not all such discrete regions of a heterogeneous tablet, such as a layer or an insert. The presence of such a layer or insert could assist break up of the entire tablet when placed in water.

Preferably, the composition of the tablet or a tablet region contains particles in which detergent active is mixed with other materials, and separate particles of sodium acetate trihydrate, desirably having a mean particle size over 0.3mm.

Tableting

Tableting entails compaction of a particulate composition. A variety of tableting machinery is known, and can be used. Generally it will function by stamping a quantity of the particulate composition which is confined in a die.

Tableting may be carried out at ambient temperature or at a temperature above ambient which may allow adequate strength to be achieved with less applied pressure during compaction. In order to carry out the tableting at a temperature which is above ambient, the particulate composition is preferably supplied to the tableting machinery at an elevated temperature. This will of course supply heat to the tableting machinery, but the machinery may be heated in some other way also.

If any heat is supplied, it is envisaged that this will be supplied conventionally, such as by passing the particulate composition through an oven, rather than by any application of microwave energy.

Example 1

Tablets suitable for use in water-softening were made from mixtures of zeolite granules and sodium acetate trihydrate.

The zeolite granules were a commercial product available from Norsohaas under designation WLZ-10. Their composition was:

| Polycarboxylate | 9-11% |
|---|---|
| Zeolite A | 69.5-73.5% |
| Water | 17-20% |

The polycarboxylate was a copolymer of acrylate and maleate. Such polymers are known as water-soluble builders which enhance the water-softening efficacy of zeolite and also inhibit redeposition of soil from a wash liquor. In these granules the polycarboxylate serves as a binder for the zeolite powder.

The granulometry of WLZ-10 was determined as:

| Rosin Rammler average particle size | 625 µm |
|---|---|
| Rosin Rammler N value | 1.88 |
| Bulk density | 777 kg/m$^3$ |

The sodium acetate trihydrate was available from Merck and its granulometry was determined as:

| Rosin Rammler average particle size | 625 µm |
|---|---|
| Rosin Rammler N value | 2.31 |

| Size distribution | |
|---|---|
| < 180 µm | 4.41% |
| < 250 µm | 10.28% |
| < 500 µm | 48.03% |
| > 500 µm | balance |

The WLZ-10 zeolite granules and the sodium acetate trihydrate were dry mixed in various proportions, and then 2 gram portions of each mixture were stamped into tablets of 13.1 mm diameter using a Carver hard press with an applied force of 20 kN.

The strength of the tablets, in their dry state as made on the press, was determined as the force, expressed in Newtons, needed to break the tablet, as measured using a Chatillon type universal testing instrument in a direction perpendicular to the direction of compression.

The speed of dissolution of the tablets was measured by a test procedure in which two of the tablets are placed on a plastic sieve with 2mm mesh size which was immersed in 9 litres of demineralised water at ambient temperature of 22°C and rotated at 200 rev/min. The water conductivity was monitored over a period of 30 minutes or until it reached a constant value.

The time for break up and dispersion of the tablets was taken as the time for change in the water conductivity to reach 90% of its final magnitude. This was also confirmed by visual observation of the material remaining on the rotating sieve.

The results are set out in the following table:

| % WLZ-10 | % Na-acetate 3aq. | Strength (N) | Dissolution (mins) |
|---|---|---|---|
| 100 | 0 | 157.5 | 7.0 |
| 90 | 10 | 214.5 | 6.8 |
| 80 | 20 | 197.50 | 3.2 |

(continued)

| % WLZ-10 | % Na-acetate 3aq. | Strength (N) | Dissolution (mins) |
|---|---|---|---|
| 75 | 25 | 275 | 1.6 |
| 0 | 100 | 199 | 2.8 |

It is apparent from the table above that incorporation of sodium acetate trihydrate leads to faster break-up and dispersion of the tablets. Moreover, this is accompanied by an increase in strength. Even more surprisingly there is a synergistic effect; a mixture provides the best strength and speed of dispersion.

Comparative

A number of other water-soluble salts were used in place of sodium acetate trihydrate, at proportions of 80wt% WLZ-10 to 20wt% of the salt. The results are shown in the table below:

| | Solubility g/100g (20°C) | Strength (N) | Dissolution (mins) |
|---|---|---|---|
| No additive | | 157.5 | 7.0 |
| Na-acetate 3aq. | 76.2 | 197.5 | 3.2 |
| Na-acetate 0aq. | 119 | 289.5 | 9.8 |
| Na-citrate 2aq. | 72$^{(25°C)}$ | 115 | 4.2 |
| K carbonate 1.5aq. | | 79 | 5.8 |
| Mg sulphate 7aq. | 71 | | 30 |

As can be seen from the table, only sodium acetate trihydrate gave an increase in strength with a reduction in the time for break-up and dispersion.
Sodium citrate dihydrate gives a reduction in dissolution time, but this is accompanied by a reduction in strength.

Example 2

Tablets were made as in Example 1, using sodium acetate trihydrate which had been sieved to give narrower ranges of particle size. The proportions of WLZ-10 and sodium acetate trihydrate were 80wt%:20wt%.
As a comparison, tablets were made in the same way, using sodium citrate dihydrate which had been sieved to give similar ranges of particle size. Results are set out in the following table which shows that sodium acetate trihydrate was consistently superior.

| Particle size (μm) | Strength (N) | | T90% (mins) | |
|---|---|---|---|---|
| | Na-citrate 2aq. | Na-acetate 3aq. | . Na-citrate 2aq. | Na-acetate 3aq. |
| >1000 μm | 122.5 | 178.5 | 5.1 | 4.8 |
| 710-1000 μm | 145 | 187.5 | 6.2 | 4.1 |
| 355-710 μm | 174.5 | 208.5 | 5.55 | 4.15 |
| <355 μm | 109 | 210.5 | 5.15 | 3.75 |

Example 3

Tablets for use in fabric washing were made, starting with a base powder of the following composition:

| Coconut alkyl sulphate [1] | 2.9% |
|---|---|

1. The coconut alkyl sulphate was incorporated as preformed granules containing 45% coconut alkyl sulphate, 35% zeolite, 11% sodium carbonate, balance water and other salts.

(continued)

| | |
|---|---|
| Zeolite A24 [2] | 52.9% |
| Sodium carbonate | 0.7% |
| Nonionic detergent [3] | 25.9% |
| Soap | 5.9% |
| Sodium carboxymethyl cellulose | 1.4% |
| Fluorescer | 0.4% |
| Acrylate/maleate copolymer | 0.7% |

2. Maximum aluminium zeolite P from Crosfields.

3. $C_{13-15}$ fatty alcohol 7EO.

This powder was mixed with sodium acetate trihydrate (from Merck as used in Example 1) and other detergent ingredients as tabulated below. As a comparative composition the base powder was mixed with sodium citrate dihydrate and other detergent ingredients and then sprayed with polyethylene glycol (Molecular Weight 1500) at 80°C.

The two compositions thus contained:

| | A (with Na-acetate 3aq). parts by weight | B (comparative) parts by weight |
|---|---|---|
| Base powder | 53.02 | 53.02 |
| Na-perborate 4aq. | 19.99 | 19.99 |
| TAED granules | 4.49 | 4.49 |
| Anti-foam granule | 3.42 | 3.42 |
| Enzymes | 1.5 | 1.5 |
| Phosphonate | 1.0 | 1.0 |
| Perfume | 0.43 | 0.43 |
| Na-acetate 3aq. | 16.13 | |
| Silicate-carbonate co-granule | | 5.5 |
| Na-citrate 2aq. | | 8.03 |
| PEG 1500 | | 2.5 |

35g portions of each composition were made into cylindrical tablets of 44 mm diameter, using a Carver hand press with various levels of compaction force.

The strength of these tablets was measured using an Instron universal testing machine to compress a tablet until fracture. The value of diametral fracture stress (DFS) was then calculated using the equation

$$\sigma = \frac{2P}{\pi Dt}$$

where $\sigma$ is the diametral fracture stress in Pascals, P is the applied load in Newtons to cause fracture, D is the tablet diameter in metres and t is the tablet thickness in metres.

The break-up, and dispersion of tablets was measured by the procedure of Example 1, using one tablet on the rotating sieve.

The results are set out in the following table:

| Compaction Force (kN) | A Tablets with Acetate.$3H_2O$ | | B Comparative tablets with citrate and PEG | |
|---|---|---|---|---|
| | Strength (DES in kPa) | $T_{90}$ (minutes) | Strength (DFS in kPa) | $T_{90}$ (minutes) |
| 1 | 5.1 | 4.0 | -- | -- |
| 2 | 7.2 | 3.8 | 19.3 | 11.1 |
| 4 | 13.7 | 3.9 | 31 | 25 |

(continued)

| Compaction Force (kN) | A Tablets with Acetate.3$H_2$O | | B Comparative tablets with citrate and PEG | |
|---|---|---|---|---|
| | Strength (DES in kPa) | $T_{90}$ (minutes) | Strength (DFS in kPa) | $T_{90}$ (minutes) |
| 5 | 20.8 | 7.5 | 43 | 30 |

It can be seen that the tablets containing acetate trihydrate, made with 5kN compaction force were almost equal in strength to the comparative tablets made at 2kN force, but dispersed faster and did not require a process step of spraying polymer onto the powder.

Example 4

Further tablets for fabric washing were made starting from the same base powder as in the previous example. This was mixed with sodium acetate trihydrate (as used in Example 1) and other detergent ingredients as follows:

| Base powder | 53.02% |
|---|---|
| Na-acetate 3aq. | 23.63 |
| Perborate monohydrate | 11.2 |
| TAED (83%) | 4.3 |
| Antifoam granule | 3.42 |
| Na-disilicate (80%) | 1.5 |
| Enzymes | 1.5 |
| Phosphonate | 1.0 |
| Perfume | 0.43 |

35g portions of the resulting composition were compacted into cylindrical tablets of 44 mm diameter using a Carver hand press as in the previous example, but with an applied force of 6kN. Strength and dispersion time were measured as in the previous Example. The tablets were found to have DFS of 20.3kPa and a $T_{90}$ of 0.9 minutes.
Visual observation confirmed that the tablets dispersed, leaving negligible residue on the sieve, within one minute.

Example 5

Tablets are made, as in the preceding Example, using a base powder of the following composition:

| | Parts by weight |
|---|---|
| Linear alkylbenzene sulphonate | 8.0 |
| Nonionic detergent | 6.5 |
| Sodium carbonate | 3.5 |
| Soap | 1.0 |
| Sodium carboxymethyl cellulose | 0.5 |
| Zeolite A24 | 28.0 |
| Sodium acetate trihydrate | 3.0 |
| Fluorescer | 0.5 |
| Acrylate maleate copolymer | 2.0 |

Example 6

Tablets for use in fabric washing were made, starting with a granulated base powder of the following composition:

|                                                    | % by weight |
| -------------------------------------------------- | ----------- |
| Coconut alkyl sulphate                             | 20.33       |
| Nonionic detergent ($c_{13-15}$ fatty alcohol 7EO) | 11.09       |
| Soap                                               | 3.60        |
| Zeolite A24                                         | 42.42       |
| Sodium carboxymethyl cellulose                     | 1.68        |
| Sodium carbonate                                   | 5.11        |
| Sodium citrate dihydrate                           | 6.37        |
| Moisture and other minor ingredients               | 9.4         |

Samples of this powder were mixed with various materials to promote disintegration and other detergent ingredients as tabulated below.

|                                  | % by weight |
| -------------------------------- | ----------- |
| Base powder                      | 50.0        |
| Perborate monohydrate            | 11.2        |
| TAED (83% active) granules       | 4.35        |
| Phosphonate                      | 0.60        |
| Sodium carbonate                 | 2.0         |
| Na-disilicate (80%)              | 3.7         |
| Antifoam granules                | 2.5         |
| Fluorescer granules (15% active) | 1.0         |
| Acrylate maleate copolymer       | 1.0         |
| Enzymes                          | 0.74        |
| Perfume                          | 0.45        |
| Disintegration promoter          | 22.5        |

The various compositions were made into tablets and tested as in Example 3. The sodium acetate trihydrate was similar to that used for Examples 1 and 3. The materials used as disintegration promoter and the test results are set out in the table below.

| Disintegration promoter                                   | Compaction force (kN) | Strength (DFS in kPa) | Dissolution ($T_{90}$ in minutes) |
| --------------------------------------------------------- | --------------------- | --------------------- | --------------------------------- |
| 22.5% Na-acetate trihydrate                               | 2                     | 8.9                   | 1.85                              |
|                                                           | 4                     | 26.5                  | 3.25                              |
|                                                           | 6                     | 36.4                  | 5.40                              |
| 19.5% Na-acetate trihydrate with 3%. PEG 1500 (as fine powder) | 2                | 13.0                  | 1.65                              |
|                                                           | 4                     | 29.5                  | 2.5                               |
|                                                           | 6                     | 47.7                  | 2.8                               |
| 14.5% Na-acetate trihydrate with 8% K-acetate             | 2                     | 19.6                  | 1.6                               |
|                                                           | 4                     | 54.9                  | 3.0                               |
|                                                           | 6                     | 113.9                 | 5.3                               |

(continued)

| Disintegration promoter | Compaction force (kN) | Strength (DFS in kPa) | Dissolution ($T_{90}$ in minutes) |
|---|---|---|---|
| 14.5% Na-acetate trihydrate with 8% sucrose | 2 | 11.1 | 1.45 |
| | 4 | 23.1 | 3.1 |
| | 6 | 37.0 | 4.55 |
| 14.5% Na-acetate trihydrate with 8% urea | 2 | 9.4 | 1.8 |
| | 4 | 22.2 | 3.15 |
| | 6 | 33.8 | 5.05 |

Example 7

Further tablets were made and tested using a similar procedure. The base powder was the same as that in Example 5. Samples of the base powder were mixed with various materials to promote disintegration, and other detergent components as in the following table

| | % by weight |
|---|---|
| Base powder | 50.0 |
| Perborate monohydrate | 14.3 |
| TAED (83% active) granules | 5.5 |
| phosphonate | 0.65 |
| Sodium carbonate | 2.0 |
| Na-disilicate (80%) | 3.7 |
| Antifoam granules | 2.5 |
| Fluorescer granules (15% active) | 1.0 |
| Acrylate maleate copolymer | 1.0 |
| Enzymes | 0.90 |
| Perfume | 0.45 |
| Disintegration aid | 18 |

The various compositions were made into tablets and tested as in Example 3. Sodium acetate trihydrate was the same as that used in Examples 1, 3 and 5. The materials used as disintegration promoter and the test results are set out in the following table:

| Disintegration promoter | Compaction force (kN) | Strength (DFS in kPa) | Dissolution ($T_{90}$ in minutes) |
|---|---|---|---|
| 18% Na-acetate trihydrate | 2 | 11.0 | 1.2 |
| | 4 | 23.2 | 3.35 |
| | 6 | 33.4 | 5.0 |
| 18% potassium acetate | 2 | 26.4 | 0.9 |
| | 4 | 54.7 | 2.35 |
| | 6 | 76.8 | 4.3 |
| 10% Na-acetate trihydrate with 8% K-acetate | 2 | 23.6 | 1.75 |
| | 4 | 54.3 | 3.65 |
| | 6 | 78.9 | 8.6 |

Example 8

Phosphate-containing tablets for use in fabric washing can be made, starting with a spray-dried base powder of the following composition:

|  | % by weight |
|---|---|
| Sodium linear alkylbenzene sulphonate | 11.5 |
| Sodium tripolyphosphate | 44.8 |
| ($C_{13-15}$ fatty alcohol 7EO) | 8.2 |
| Sodium silicate | 11.8 |
| Soap | 1.1 |
| Sodium carboxymethyl cellulose | 0.9 |
| Acrylate/maleate copolymer | 3.2 |
| Sodium sulphate, moisture and minor ingredients | balance to 100% |

This powder is mixed with particles of sodium acetate trihydrate and other detergent ingredients as tabulated below.

|  | % by weight |
|---|---|
| Base powder | 66.6 |
| Sodium perborate tetrahydrate | 10.0 |
| Tetraacetylethylenediamine (TAED) granules | 4.0 |
| Anti-foam granule | 1.5 |
| Enzymes | 0.8 |
| Phosphonate | 0.5 |
| Sodium carbonate | 2.6 |
| Sodium acetate trihydrate | 14.0 |

**Claims**

1. A tablet of a compacted particulate composition wherein the tablet or a region thereof comprises at least 15% by weight of a water-softening agent, and wherein the tablet or said region thereof contains salt which is mixed with the water-softening agent and which is 10 to 35% by weight of sodium acetate trihydrate, potassium acetate or mixture thereof optionally together with sodium citrate dihydrate, such that the total quantity of sodium acetate trihydrate, potassium acetate and sodium citrate dihydrate does not exceed 50% by weight of the tablet or region thereof.

2. A tablet according to claim 1 wherein the tablet or said region thereof comprises from at least 15% by weight of a water-insoluble water-softening agent.

3. A tablet according to claim 1 or claim 2 wherein the tablet or said region thereof contains 10% to 35% by weight of sodium acetate trihydrate, optionally together with sodium citrate dihydrate, such that the total quantity of sodium acetate trihydrate and sodium citrate dihydrate does not exceed 50% by weight of the tablet or said region thereof.

4. A tablet according to any one of claims 1 to 3 wherein the tablet or said region thereof contains from 50% to 90% by weight of water-insoluble water-softening agent and from 10% to 30% by weight of sodium acetate trihydrate, potassium acetate or mixture thereof.

5. A tablet according to any one of claims 1 to 3 wherein the tablet or said region thereof also contains 5 to 50% by weight of one or more detergent active compounds.

6. A tablet according to any one of claims 1 to 3 wherein the tablet or said region contains from 15% to 60% by weight of water-insoluble water-softening agent together with 5% to 50% by weight of one or more detergent-active compounds and from 10% to 30% by weight of sodium acetate trihydrate, potassium acetate or mixture thereof.

7. A tablet according to claim 5 or claim 6 wherein the detergent-active is present in particles containing water-softening agent.

8. A tablet according to claim 5 or claim 6 wherein the tablet or region thereof contains particles in which the detergent active is mixed with other material and contains separate particles of sodium acetate trihydrate.

9. A tablet according to claim 8 wherein the tablet or region thereof contains particles in which the detergent active is mixed with other material and also contains at least 10% by weight of sodium acetate trihydrate present as separate particles.

10. A tablet according to claim 5 or claim 6 wherein the detergent-active is present in particles containing water-softening agent, and the tablet or said region thereof contains at least 13% by weight of sodium acetate trihydrate with mean particle size over 250μm preferably over 300μm.

11. A tablet according to any one of the preceding claims wherein the water-softening agent is water-insoluble, and is alkali metal aluminosilicate, crystalline layered silicate or a mixture thereof.

12. A tablet according to claim 11 wherein alkali metal aluminosilicate provides at least 15% by weight of the tablet or said region thereof.

13. A tablet according to any one of the preceding claims wherein the tablet or said region thereof contains from 2% to 30% by weight of water-soluble supplementary detergency builder which is a polycarboxylate.

14. A tablet according to any one of the preceding claims wherein the tablet or said region thereof contains from 10% to 30% of sodium acetate trihydrate and from 5% to 20% by weight of sodium citrate dihydrate.

15. A tablet according to any one of the preceding claims wherein the sodium acetate trihydrate has a mean particle size of over 250μm preferably over 300μm.

16. A tablet according to any one of the preceding claims wherein the tablet or said region thereof contains at least 13% by weight of sodium acetate trihydrate with a mean particle size over 0.3mm.

17. A tablet according to any one of claims 1 to 13 wherein the tablet or said region thereof contains from 10 to 35% of potassium acetate and from 5% to 20% by weight of sodium citrate dihydrate.

18. Use of 10% to 35% by weight of sodium acetate trihydrate, potassium acetate or a mixture thereof, in a tablet of compacted particulate composition or a region thereof, to enhance the disintegration of the tablet in water, wherein the tablet or a region thereof comprises at least 15% by weight of a water-softening agent, and where the sodium acetate trihydrate, potassium acetate or mixture thereof may be mixed together with sodium citrate dihydrate, such that the total quantity of sodium acetate trihydrate, potassium acetate and sodium citrate dihydrate does not exceed 50% by weight of the tablet or region thereof.

**Patentansprüche**

1. Tablette aus einer verdichteten teilchenförmigen Zusammensetzung, wobei die Tablette oder ein Bereich davon mindestens 15 Gew.-% eines Wasser-enthärtenden Mittels umfaßt und wobei die Tablette oder der Bereich davon Salz enthält, das mit dem Wasser-enthärtenden Mittel vermischt ist und das 10 bis 35 Gew.-% Natriumacetattrihydrat, Kaliumacetat oder ein Gemisch davon, gegebenenfalls zusammen mit Natriumcitratdihydrat, ist, so daß die Gesamtmenge an Natriumacetattrihydrat, Kaliumacetat und Natriumcitratdihydrat 50 Gew.-% der Tablette oder des Bereichs davon nicht übersteigt.

EP 0 838 519 B1

**2.** Tablette nach Anspruch 1, wobei die Tablette oder der Bereich davon mindestens 15 Gew.-% eines Wasser-unlöslichen, Wasser-enthärtenden Mittels umfaßt.

**3.** Tablette nach Anspruch 1 oder Anspruch 2, wobei die Tablette oder der Bereich davon 10% bis 35 Gew.-% Natriumacetattrihydrat, gegebenenfalls zusammen mit Natriumcitratdihydrat, enthält, so daß die Gesamtmenge an Natriumacetattrihydrat und Natriumcitratdihydrat 50 Gew.-% der Tablette oder des Bereichs davon nicht übersteigt.

**4.** Tablette nach einem der Ansprüche 1 bis 3, wobei die Tablette oder der Bereich davon 50% bis 90 Gew.-% Wasserunlösliches, Wasser-enthärtendes Mittel und 10% bis 30 Gew.-% Natriumacetattrihydrat, Kaliumacetat oder ein Gemisch davon enthält.

**5.** Tablette nach einem der Ansprüche 1 bis 3, wobei die Tablette oder der Bereich davon auch 5 bis 50 Gew.-% von einem oder mehreren Waschmittelaktivstoffverbindungen enthält.

**6.** Tablette nach einem der Ansprüche 1 bis 3, wobei die Tablette oder der Bereich davon 15% bis 60 Gew.-% von Wasserunlöslichem, Wasser-enthärtendem Mittel, zusammen mit 5% bis 50 Gew.-% von einem oder mehreren Waschmittelaktivstoffverbindungen und 10% bis 30 Gew.-% von Natriumacetattrihydrat, Kaliumacetat oder einem Gemisch davon enthält.

**7.** Tablette nach Anspruch 5 oder Anspruch 6, wobei der Waschmittelaktivstoff in Teilchen vorliegt, die Wasser-enthärtendes Mittel enthalten.

**8.** Tablette nach Anspruch 5 oder Anspruch 6, wobei die Tablette oder der Bereich davon Teilchen enthält, in denen der Waschmittelaktivstoff mit anderem Material vermischt ist und gesonderte Teilchen von Natriumacetattrihydrat enthält.

**9.** Tablette nach Anspruch 8, wobei die Tablette oder der Bereich davon Teilchen enthält, in denen der Waschmittelaktivstoff mit anderem Material vermischt ist und auch mindestens 10 Gew.-% als gesonderte Teilchen vorliegendes Natriumacetattrihydrat enthält.

**10.** Tablette nach Anspruch 5 oder Anspruch 6, wobei der Waschmittelaktivstoff in Teilchen, die Wasser-enthärtendes Mittel enthalten, vorliegt und die Tablette oder der Bereich davon mindestens 13 Gew.-% Natriumacetattrihydrat mit einer mittleren Teilchengröße oberhalb 250 µm, vorzugsweise oberhalb 300 µm, enthält.

**11.** Tablette nach einem der vorangehenden Ansprüche, wobei das Wasser-enthärtende Mittel Wasser-unlöslich ist und Alkalimetallaluminosilicat, kristallines Schichtsilicat oder ein Gemisch davon ist.

**12.** Tablette nach Anspruch 11, wobei das Alkalimetallaluminosilicat mindestens 15 Gew.-% der Tablette oder des Bereichs davon bereitstellt.

**13.** Tablette nach einem der vorangehenden Ansprüche, wobei die Tablette oder der Bereich davon 2% bis 30 Gew.-% Wasser-löslichen, ergänzenden Waschmittel-Builder, der ein Polycarboxylat darstellt, enthält.

**14.** Tablette nach einem der vorangehenden Ansprüche, wobei die Tablette oder der Bereich davon 10% bis 30% Natriumacetattrihydrat und 5% bis 20 Gew.-% Natriumcitratdihydrat enthält.

**15.** Tablette nach einem der vorangehenden Ansprüche, wobei das Natriumacetattrihydrat eine mittlere Teilchengröße oberhalb 250 µm, vorzugsweise oberhalb 300 µm, aufweist.

**16.** Tablette nach einem der vorangehenden Ansprüche, wobei die Tablette oder der Bereich davon mindestens 13 Gew.-% Natriumacetattrihydrat mit einer mittleren Teilchengröße oberhalb 0,3 mm enthält.

**17.** Tablette nach einem der Ansprüche 1 bis 13, wobei die Tablette oder der Bereich davon 10 bis 35% Kaliumacetat und 5% bis 20 Gew.-% Natriumcitratdihydrat enthält.

**18.** Verwendung von 10% bis 35 Gew.-% Natriumacetattrihydrat, Kaliumacetat oder einem Gemisch davon in einer Tablette von verdichteter, teilchenförmiger Zusammensetzung oder einem Bereich davon zur Erhöhung des Zerfalls der Tablette in Wasser, wobei die Tablette oder ein Bereich davon mindestens 15 Gew.-% eines Wasser-

**15**

enthärtenden Mittels umfaßt und wobei das Natriumacetattrihydrat, Kaliumacetat oder ein Gemisch davon mit Natriumcitratdihydrat vermischt werden kann, so daß die Gesamtmenge von Natriumacetattrihydrat, Kaliumacetat und Natriumcitratdihydrat 50 Gew.-% der Tablette oder des Bereichs davon nicht übersteigt.

## Revendications

1. Comprimé d'une composition particulaire agglomérée dans lequel le comprimé ou une région de celui-ci comprend au moins 15% en poids d'un agent d'adoucissement de l'eau et dans lequel le comprimé ou ladite région de celui-ci contient un sel qui est mélangé avec l'agent d'adoucissement de l'eau et qui est 10 à 35% en poids d'acétate de sodium trihydraté, d'acétate de potassium ou leur mélange facultativement avec du citrate de sodium dihydraté de sorte que la quantité totale d'acétate de sodium trihydraté, d'acétate de potassium et de citrate de sodium dihydraté n'excède pas 50% en poids du comprimé ou une région de celui-ci.

2. Comprimé selon la revendication 1, dans lequel le comprimé ou ladite région de celui-ci comprend au moins 15% en poids d'un agent d'adoucissement de l'eau insoluble dans l'eau.

3. Comprimé selon la revendication 1 ou 2, dans lequel le comprimé ou ladite région de celui-ci contient 10 à 35% en poids d'acétate de sodium trihydraté, facultativement avec du citrate de sodium dihydraté de sorte que la quantité totale d'acétate de sodium trihydraté et de citrate de sodium dihydraté n'excède pas 50% en poids du comprimé ou de ladite région de celui-ci.

4. Comprimé selon l'une quelconque des revendications 1 à 3, dans lequel le comprimé ou ladite région de celui-ci contient de 50 à 90% en poids d'agent d'adoucissement de l'eau insoluble dans l'eau et de 10 à 30% en poids d'acétate de sodium trihydraté, d'acétate de potassium ou leur mélange.

5. Comprimé selon l'une quelconque des revendications 1 à 3, dans lequel le comprimé ou ladite région de celui-ci contient également 5 à 50% en poids d'un ou plusieurs composés détergents actifs.

6. Comprimé selon l'une quelconque des revendications 1 à 3, dans lequel le comprimé ou ladite région contient de 15 à 60% en poids d'agent d'adoucissement de l'eau insoluble dans l'eau avec 5 à 50% en poids d'un ou plusieurs composés détergents actifs et de 10 à 30% en poids d'acétate de sodium trihydraté, d'acétate de potassium ou leur mélange.

7. Comprimé selon la revendication 5 ou 6, dans lequel le détergent actif est présent dans des particules contenant l'agent d'adoucissement de l'eau.

8. Comprimé selon la revendication 5 ou 6, dans lequel le comprimé ou sa région contient des particules dans lesquelles le détergent actif est mélangé avec une autre matière et contient des particules séparées d'acétate de sodium trihydraté.

9. Comprimé selon la revendication 8, dans lequel le comprimé ou sa région contient des particules dans lesquelles le détergent actif est mélangé avec une autre matière et contient également au moins 10% en poids d'acétate de sodium trihydraté présent sous forme de particules séparées.

10. Comprimé selon la revendication 5 ou 6, dans lequel l'actif détergent est présent dans des particules contenant l'agent d'adoucissement de l'eau et le comprimé ou ladite région de celui-ci contient au moins 13% en poids d'acétate de sodium trihydraté avec une granulométrie moyenne supérieure à 250 μm, de préférence supérieure à 300 μm.

11. Comprimé selon l'une quelconque des revendications précédentes, dans lequel l'agent d'adoucissement de l'eau est insoluble dans l'eau et il est un aluminosilicate de métal alcalin, un silicate cristallin en couches ou leur mélange.

12. Comprimé selon la revendication 11, dans lequel l'aluminosilicate de métal alcalin fournit au moins 15% en poids du comprimé ou de ladite région de celui-ci.

13. Comprimé selon l'une quelconque des revendications précédentes, dans lequel le comprimé ou ladite région de celui-ci contient de 2 à 30% en poids d'un adjuvant de détergence supplémentaire hydrosoluble qui est un polycarboxylate.

14. Comprimé selon l'une quelconque des revendications précédentes, dans lequel le comprimé ou ladite région de celui-ci contient de 10 à 30% d'acétate de sodium trihydraté et de 5 à 20% en poids de citrate de sodium dihydraté.

15. Comprimé selon l'une quelconque des revendications précédentes, dans lequel l'acétate de sodium trihydraté a une granulométrie moyenne qui dépasse 250 µm, de préférence qui dépasse 300 µm.

16. Comprimé selon l'une quelconque des revendications précédentes, dans lequel le comprimé ou ladite région de celui-ci contient au moins 13% en poids d'acétate de sodium trihydraté avec une granulométrie moyenne de plus de 0,3 mm.

17. Comprimé selon l'une quelconque des revendications 1 à 13, dans lequel le comprimé ou ladite région de celui-ci contient de 10 à 35% d'acétate de potassium et de 5 à 20% en poids de citrate de sodium dihydraté.

18. Utilisation de 10 à 35% en poids d'acétate de sodium trihydraté, d'acétate de potassium ou leur mélange dans un comprimé de composition particulaire agglomérée ou une région de celui-ci, pour renforcer la désintégration du comprimé dans l'eau, dans laquelle le comprimé ou une région de celui-ci comprend au moins 15% en poids d'un agent d'adoucissement de l'eau et dans laquelle l'acétate de sodium trihydraté, l'acétate de potassium ou leur mélange peuvent être mélangés avec le citrate de sodium dihydraté de sorte que la quantité totale d'acétate de sodium trihydraté, d'acétate de potassium et de citrate de sodium dihydraté n'excède pas 50% en poids du comprimé ou de sa région.